(19)

Europäisches
Patentamt
European
Patent Office
Office européen
des brevets

(11) **EP 3 608 841 A1**

(12) **EUROPEAN PATENT APPLICATION**
published in accordance with Art. 153(4) EPC

(43) Date of publication:
**12.02.2020 Bulletin 2020/07**

(21) Application number: **17904955.6**

(22) Date of filing: **19.05.2017**

(51) Int Cl.:
***G06K 9/62*** *(2006.01)*

(86) International application number:
**PCT/CN2017/085036**

(87) International publication number:
**WO 2018/184282 (11.10.2018 Gazette 2018/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **08.04.2017 CN 201710226206**

(71) Applicant: **Dalian Wanda Group Co., Ltd.**
**Xigang District**
**Dalian**
**Liaoning 116011 (CN)**

(72) Inventors:
• **DING, Benxi**
  **Beijing 100022 (CN)**
• **QI, Jie**
  **Beijing 100022 (CN)**

• **LAI, Jianyan**
  **Beijing 100022 (CN)**
• **YIN, Qiang**
  **Beijing 100022 (CN)**
• **WANG, Fukui**
  **Beijing 100022 (CN)**
• **ZHU, Zhenbei**
  **Beijing 100022 (CN)**
• **SANG, Guoan**
  **Beijing 100022 (CN)**
• **WANG, Rong**
  **Beijing 100022 (CN)**
• **ZHANG, Aizhen**
  **Beijing 100022 (CN)**
• **CHEN, Haiyan**
  **Beijing 100022 (CN)**
• **SONG, Peng**
  **Beijing 100022 (CN)**

(74) Representative: **Ipside**
**7-9 Allées Haussman**
**33300 Bordeaux Cedex (FR)**

(54) **METHOD FOR COMPARING FITTINGNESS OF TWO-DIMENSIONAL DRAWING IN ENGINEERING**

(57)    A method for comparing the fittingness of a two-dimensional drawing in engineering, at least comprising the following steps: A. obtaining vector and bitmap information of a standard drawing which serves as a foundation and of a project drawing; B. carrying out hash operation on entity types and characteristic points in the vector and bitmap information, and comparing project information of the same hash value; C. calculating at least one or more pieces of information out of an entity change percentage, an area difference percentage, a manual intervention area change percentage and a pixel difference percentage according to the comparison result; and D. obtaining drawing fittingness information according to the obtained information and difference entity weight information. The described method only compares the same parts of a project drawing and a standard drawing, that is, the ratio of an entity in the project drawing that is the same as that in the standard drawing multiplied by a corresponding layer weight value to the total entity in the standard drawing multiplied by a corresponding layer weight, thus ensuring a good fit between the comparison result and a comparison made by a person.

A, Obtain vector and bitmap information of a standard drawing as a basis and vector and bitmap information of a project drawing

B, Perform a hash calculation on an entity type and a characteristic point in the vector and bitmap information, and compare project information for a same hash value

C, Calculate, based on a comparison result, at least one or more of the following parameters: a percentage of entity change, a percentage of area difference, a percentage of area change after manual intervention and a percentage of pixel difference

D, Obtain the fitness of the drawing based on the calculated parameters and different entity weight information

**Figure 1**

**Description**

**FIELD**

The present disclosure relates to the field of architectural engineering, and in particular to a method for determining fitness of two-dimensional drawings in engineering.

**BACKGROUND**

With the rapid development of the architectural industry, the workload in the industry is increasing. For the same developer, especially in similar project design, they usually modify an original engineering drawing to design a new engineering drawing. For convenience, the original engineering drawing is generally called a reference drawing, and the modified drawing for the new project is called a project drawing. In this case, the developer pays close attention to the fitness between project drawings and reference drawing, and thus determines different management modes for the project. Conventionally, only vector comparison or bitmap comparison is adopted, and for various modified drawings, it is difficult to obtain comparison data that is comparable to manual comparison for various engineering situations. Therefore, it is desirable for a method for improving determination of the fitness of two-dimensional drawings in the conventional technology.

**SUMMARY**

An object of the present disclosure is to provide a method for determining fitness of two-dimensional drawings in engineering, to overcome the defects in the conventional technology, and improve the fitness of the determination result and the manual determination result in various situations.

The following technical solution is provided according to the present disclosure to solve the technical problem.

A method for determining fitness of two-dimensional drawings in engineering is provided. The method includes at least:

A obtaining vector and bitmap information of a reference drawing as a basis and vector and bitmap information of a project drawing;

B performing a hash calculation on an entity type and a characteristic point in the vector and bitmap information, and comparing project information for a same hash value;

C calculating, based on a comparison result, at least one or more of the following parameters: a percentage of entity change, a percentage of area difference, a percentage of area change after manual intervention and a percentage of pixel difference; and

D obtaining the fitness of the drawings based on the calculated parameters and different entity weight information.

In the step B, the process of performing a hash calculation includes:

creating a character string based on an entity name and the characteristic point, and performing a hash calculation on the character string to obtain unique identity information; and

comparing project information with a same hash value in the reference drawing and the project drawing; if a hash value exists in the reference drawing and a corresponding hash value is not found in the project drawing, deleting a graphic element corresponding to the hash value; and if a hash value not existing in the reference drawing has a corresponding hash value in the project drawing, adding a graphic element corresponding to the hash value.

In the step C,
the percentage of entity change indicates a ratio of the number of different entities to the total number of entities;
the percentage of area difference indicates a ratio of different area to a total area;
the percentage of area change after manual intervention indicates a ratio of an area of affected entity after the manual intervention to a total area of the entities; and
the percentage of pixel difference indicates a ratio of the number of different pixels to the total number of pixels.

In the step D, fitness is calculated according to the following equations:

$$\text{fitness of entity} = 1 - \text{percentage of entity change};$$

$$\text{fitness of area} = 1 - \text{percentage of affected area};$$

$$\text{fitness of area after manual intervention} = 1 - \text{percentage of area change after manual intervention};$$

and

$$\text{fitness of pixel} = 1 - \text{percentage of pixel change}.$$

The step D is performed according to the following equations:

$$\text{change rate for weights} = [(\text{ the number of changed entities at corner cut}*3 + \text{the number of changed entities outside an axis}*3 + \Sigma\text{the number of changed entities other than the changed entities at the corner cut and outside the axis}*\text{weight of a corresponding graphic layer})/(\text{the number of unchanged entities} + \text{numerator})]*100\% + \text{fixed percentage of format position change};$$

$$\text{the number of unchanged entities} = \text{the total number of entities participating in comparison in the reference drawing} - \text{the number of changed entities in the reference drawing} - \text{the number of changed entities in the project drawing});$$

$$\text{fitness} = 1 - \text{change rate for weights};$$

and

$$\text{fitness for weights} = 1 - \text{a percentage of weight change}.$$

The step D further includes: obtaining fitness of weight according to the following equation:

$$\text{fitness of weight} = (\text{the number of same entity} * \text{weight of a corresponding graphic layer})/(\text{the total number of entities} * \text{weight of a corresponding graphic layer}).$$

The method further includes step E: generating a comparison table of comparison results.
The following beneficial effects are realized according to the present disclosure.
According to the solution of the present disclosure, only the same parts in the project drawing and the reference drawing are compared. That is, a ratio of a product of the same entity in the project drawing and the reference drawing and the weight of the corresponding graphic layer to a product of the total number of entities in the reference drawing and the weight of the corresponding graphic layer is calculated, thereby ensuring high fitness between the comparison result and the manual comparison.

**BRIEF DESCRIPTION OF THE DRAWINGS**

Figure 1 is a flow chart of a method for determining fitness of two-dimensional drawings in engineering according to the present disclosure; and

Figure 2 is a flow chart of a solution of fitness for weights according to the present disclosure.

**DETAILED DESCRIPTION**

The technical solutions of the present disclosure are further described below in conjunction with the embodiments and the drawings.

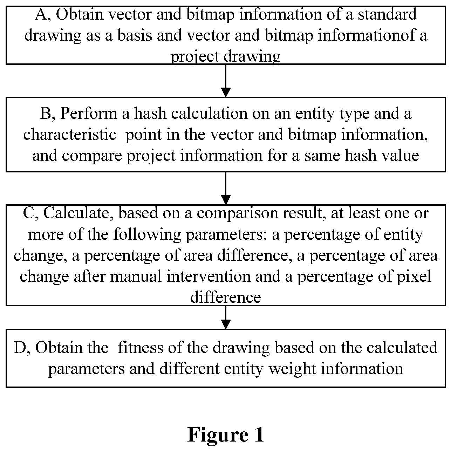

A method for determining the fitness of two-dimensional drawings in engineering is provided according to the present disclosure. Referring to the flow chart of the method shown in Figure 1, the method includes the following steps A to D.

In step A, vector and bitmap information of a reference drawing as a basis and vector and bitmap information of a project drawing is obtained.

In step B, a hash calculation is performed on an entity type and a characteristic point in the vector and bitmap information, and project information for a same hash value is compared.

In step C, at least one or more of the following parameters: a percentage of entity change, a percentage of area difference, a percentage of area change after manual intervention and a percentage of pixel difference, is calculated based on a comparison result.

In step D, the fitness of the drawing is obtained based on the calculated parameter and different entity weight information.

In the embodiment according to the present disclosure, fitness for the reference drawing and the project drawing is determined. The project drawing is obtained by modifying based on the reference drawing. Generally speaking, the drawing comparison includes vector comparison and bitmap comparison. In the vector comparison, different points of the two drawings are quickly determined, the changed entity areas are accumulated, and a percentage of the changed area and the total area is calculated. The changed area may be adjusted through manual intervention by users, and a percentage of the affected area is calculated. In the bitmap comparison, two bitmaps are generated for comparison regions of the two drawings, and comparison is performed on the two bitmaps pixel by pixel to calculate the percentage of pixel change.

In this embodiment, according to the above step B, the process of performing a hash calculation includes: creating a character string based on an entity name and the characteristic point, and performing a hash calculation on the character string to obtain unique identity information; comparing project information with a same hash value in the reference drawing and the project drawing; if a hash value exists in the reference drawing and a corresponding hash value is not found in the project drawing, deleting a graphic element corresponding to the hash value; and if a hash value not existing in the reference drawing has a corresponding hash value in the project drawing, adding a graphic element corresponding to the hash value. In the step C, the percentage of the entity change indicates a ratio of the number of different entities to the total number of entities; the percentage of area difference indicates a ratio of a difference area to a total area; the percentage of area change after manual intervention indicates a ratio of an area of affected entity after the manual intervention to the total area of entities; and the percentage of pixel difference indicates a ratio of the number of different pixels to the total number of pixels.

Graphic elements to be compared in the two drawings are grouped into two groups, based on the entity type and the characteristic points. That is, a character string is created based on the entity name and the characteristic points, a hash calculation is performed on the character string, and the obtained hash value serves as a unique identity ID for fast retrieval. Taking a straight line as an example, the character string for the straight line is consist of LINE, a start point and an end point. The hash calculation is performed on the string character to obtain a string of small binary values with a fixed length, that is, the hash value of the line. For the graphic elements with the same hash value in the two drawings, various types of information is compared, and it is considered to be comparable, that is, there are two cases of the same or different. Graphic elements with different hash values are required to be deleted or added. If a hash value exists in the reference drawing and a corresponding hash value is not found in the project drawing, a graphic element corresponding to the hash value is deleted; otherwise, the graphic element is added. Each entity with differences is recorded, all the differences may be viewed, or the differences may be viewed one by one. The percentage of entity change = the number of different entities/the total number of entities. For example, in this embodiment, the number of different entities is 1070, and the total number of entities is 10048, so the percentage of entity change may be calculated to be 10.65%.

Similarly, according to the step C, the percentage of the difference area is calculated according to the equation: the percentage of difference area = difference area/total area. Circumscribed rectangles are made to the graphic elements participating in comparison in the reference drawing, a sum operation is performed on area domains through calling the join command in CAD, to calculate the total area. A circumscribed rectangle is made to each of the different entities checked in the step B, and a sum operation is performed on the area domain to calculate the difference area. In this embodiment, the calculated difference area is 631719643.80, and the total area is 7058472886.78. According to the calculation equation, the percentage of the difference area is 8.95%. The percentage of the area change after manual intervention is recalculated according to the results in the step B by a computer. In which, the percentage of the area change after manual intervention = an area of affected entity after manual intervention / a total area of the entities. In this embodiment, the area of the affected entity after the manual intervention is 3656626097.60, and the total area of the entities is 42370073162.54, so the percentage of the area change after the manual intervention is 8.39%. Similarly, the calculation of the percentage of the pixel difference is as follows. Two bitmaps are generated for the comparison regions of the two drawings, and the two bitmaps are compared pixel by pixel to calculate the number of the different pixels. The percentage of the pixel difference = the number of different pixels/the total number of pixels.

In the step D according to the embodiment of the present disclosure, fitness is calculated according to the following equations:

$$\text{fitness of entity} = 1- \text{percentage of entity change;}$$

$$\text{fitness of area} = 1- \text{percentage of affected area;}$$

$$\text{fitness of area after manual intervention} = 1- \text{percentage of area change after manual intervention;}$$

and

$$\text{fitness of pixel} = 1- \text{percentage of pixel change.}$$

The step D is performed according to the following equations:

$$\text{change rate for weights} = [(\text{ the number of changed entities at corner cut}*3+ \text{ the number of changed entities outside an axis}*3+ \Sigma \text{ the numbers of changed entities other than the changed entities at the corner cut and outside the axis}*\text{weight of a corresponding graphic layer})/(\text{the number of unchanged entities + numerator})]*100\% + \text{ fixed percentage of format position change;}$$

$$\text{the number of unchanged entities} = \text{ the total number of entities participating in comparison in the reference drawing} - \text{ the number of changed entities in the reference drawing} - \text{ the number of changed entities in the project drawing);}$$

$$\text{fitness} = 1- \text{change rate for weights;}$$

and

$$\text{fitness for weights} = 1- \text{a percentage of weight change.}$$

The step D further includes: obtaining fitness of weight according to the following equation:

$$\text{fitness of weight} = \text{(the number of same entity * weight of a corresponding graphic layer)/(the total number of entities * weight of a corresponding graphic layer)}.$$

Based on comparison results of the entities in the two drawings, the change rate for weights is calculated. The project drawing is relative to the reference drawing, the weight for the changed entities outside an axis is 3, the weight for the changed entities at the corner cut (a region enclosed by four corners and three horizontal and longitudinal axis) is 5, and the remaining change entities are multiplied by the weight of the corresponding graphic layer. For a case of addition and subtraction spans, comparison is performed for four times by taking the intersection points of the axes at the four corners as base points. In the four comparisons, for an entity that participates in comparison, if the entity is determined to be an unchanged entity once, the entity is determined as an unchanged entity and the remaining entities are determined as changed entities. Then the degree of difference is calculated according to the equation of difference percentage for weights, and the fitness is derived based on the calculated degree of difference according to the following equations. Change rate for weights =[(the number of changed entities at corner cut*3+ the number of changed entities outside an axis*3+ $\Sigma$ the numbers of changed entities other than the changed entities at the corner cut and outside the axis*weight of a corresponding graphic layer)/(the number of unchanged entities + numerator)]*100% + fixed percentage of format position change; the number of unchanged entities = the number of total entities participating in comparison in the reference drawing- the number of changed entities in the reference drawing- the number of changed entities in the project drawing; and fitness = 1- change rate for weights.

The user may calculate fitness of the fitness of the two-dimensional drawing based on the percentage of the entity change, the percentage of the affected area, the percentage of the area change after manual intervention, the percentage of the pixel change, and the change rate for weights calculated through the program, according to the following equations:

$$\text{fitness of entity} = 1 - \text{percentage of entity change};$$

$$\text{fitness of area} = 1 - \text{percentage of affected area};$$

$$\text{fitness of area after manual intervention} = 1 - \text{percentage of area change after manual intervention};$$

$$\text{fitness of pixel} = 1 - \text{percentage of pixel change};$$

and

$$\text{fitness for weights} = 1 - \text{a percentage of weight change}.$$

In a preferred embodiment of the present disclosure, a solution using fitness of weight is provided, and the following calculation formula is provided:

$$\text{fitness of weight} = \text{(the number of same entity * weight of a corresponding graphic layer)/(the number of total entities * weight of a corresponding graphic layer)}.$$

In this solution, only the same parts in the project drawing and the reference drawing are compared. That is, the ratio of a product of the same entity in the project drawing and the reference drawing and the weight of the corresponding graphic layer to a product of the total number of entities in the reference drawing and the weight of the corresponding graphic layer is calculated. This algorithm conforms to the actual situations most at present.

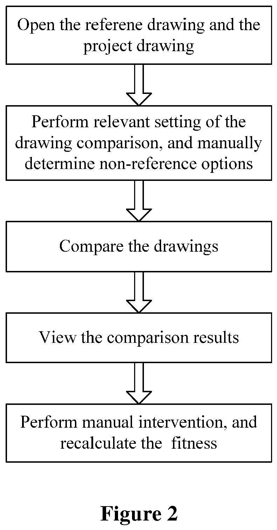

Reference is made to Figure 2, which is a flow chart of operations. Comparison is performed on architectural drawings. For a supermarket in a shopping mall for example, when the position or structure changes, many workloads cannot be reflected in the architectural drawing. Therefore, the manual intervention is added in the solution. For example, an adjustment amount for format change of a supermarket may be manually determined based on actual conditions. In an example, first the reference drawing and the project drawing are determined, non-reference project variables are manually determined, that is, the non-variable parts preset for the project are manually checked. If the parts are adjusted, the drawing is classified as a non-reference type, referring to Table 1.

Table 1

| Summary table of non-reference project variables | | |
| --- | --- | --- |
| Design variables | | Design change and impact |
| Fire fighting | The fire department does not agree with the annular moving lines (all lines are annular moving lines in the reference drawing). | 1. Modifying moving lines of the pedestrian street will result in significant adjustments to the architectural plane solution and various professional designs.<br>2. Affecting area of shops close to the pedestrian street and the investment return rate. |
| | The fire department does not agree to use scissors stairs. | 1. Increasing the number of stairs will affect the architectural plane, resulting in significant adjustments to the architectural plane and various professional designs.<br>2. Reducing the rental area and the investment return rate. |
| Site height difference | The height difference between the two main entrances is greater than 3 meters. | 1. If the height difference of the site is too large, great adjustment is performed on the building in the vertical direction, and a situation of double-head layer will appear, further resulting in significant modifications to the architectural plane and various professional designs.<br>2. Affecting the design of the outdoor landscape, resulting in adding stairs and retaining walls for the landscape, and causing the modification of the route and drainage of municipal pipelines. |
| Anti-seismic fortification condition | Four cases: seven degrees (0.15g) the fourth type of site soil, eight degrees (0.20g) the third type of site soil, eight degrees (0.30g) and nine degrees. | Changing the structural system, increasing the shear wall and adjusting the component cross-section size, resulting in the modification of the architectural plane, mechanical and electrical, and internal designs. |

According to the above steps of the method, the read data is processed. The adjustment amount ratio and so on may be manually determined. The process based on the manual intervention may be implemented by using the conventional technology, and thus is not described herein. The user may add or delete the format text according to the specific conditions of the project, and may adjust the added value corresponding to the main entrance/exit or the main store. The reference drawing is compared with the project drawing according to the method of the present disclosure. After the above comparison method is completed, central amplification is performed on the two drawings and the entities are gray displayed. The changed entities are highlighted in red, yellow and blue and the results of the comparison are popped up. In addition, in this embodiment, a comparison result table (comparison report) may be generated and presented to the user. The generation of the comparison result may be implemented by the conventional technology, and thus is not described herein. In the comparison method according to the present disclosure, manual intervention may be performed, and comparison is repeated after the relevant information is changed.

The order of the above embodiments is merely for convenience and does not represent the advantages and disadvantages of the embodiments.

It should be noted that the above embodiments are only used to illustrate the technical solutions of the present disclosure, and are not intended to limit the present disclosure. Although the present disclosure is described in detail in conjunction with the above embodiments, those skilled in the art should understand that: the technical solutions described in the above embodiments may be modified, or some of the technical features may be equivalently replaced. The modifications or the replacements to the technical solutions fall within the spirit and scope of according to the embodiments of the present disclosure.

**Claims**

1. A method for determining fitness of two-dimensional drawings in engineering, comprising at least:

   A, obtaining vector and bitmap information of a reference drawing as a basis and vector and bitmap information of a project drawing;
   B, performing a hash calculation on an entity type and a characteristic point in the vector and bitmap information, and comparing project information for a same hash value;
   C, calculating, based on a comparison result, at least one or more of the following parameters: a percentage of entity change, a percentage of area difference, a percentage of area change after manual intervention and a percentage of pixel difference; and
   D, obtaining the fitness of the drawings based on the calculated parameters and different entity weight information.

2. The method for determining fitness of two-dimensional drawings in engineering according to claim 1, wherein in the step B, the performing a hash calculation comprises:

   creating a character string based on an entity name and the characteristic point, and performing a hash calculation on the character string to obtain unique identity information; and
   comparing project information with a same hash value in the reference drawing and the project drawing; if a hash value exists in the reference drawing and a corresponding hash value is not found in the project drawing, deleting a graphic element corresponding to the hash value; and if a hash value not existing in the reference drawing has a corresponding hash value in the project drawing, adding a graphic element corresponding to the hash value.

3. The method for determining fitness of two-dimensional drawings in engineering according to claim 2, wherein in the step C,
   the percentage of the entity change indicates a ratio of the number of different entities to the total number of entities; the percentage of the area difference indicates a ratio of a difference area to a total area; the percentage of area change after manual intervention indicates a ratio of an area of affected entities after the manual intervention to a total area of the entities; and
   the percentage of pixel difference indicates a ratio of the number of different pixels to the total number of pixels.

4. The method for determining fitness of two-dimensional drawings in engineering according to claim 3, wherein in the step D, fitness is calculated according to the following equations:

$$\text{fitness of entity} = 1 - \text{percentage of entity change;}$$

$$\text{fitness of area} = 1 - \text{percentage of affected area;}$$

$$\text{fitness of area after manual intervention} = 1 - \text{percentage of area change after manual intervention;}$$

and

$$\text{fitness of pixel} = 1 - \text{percentage of pixel change.}$$

5. The method for determining fitness of two-dimensional drawings in engineering according to claim 4, wherein the step D is performed according to the following equations:

change rate for weights = [(the number of changed entities at corner cut*3 + the number of changed entities outside an axis*3 + Σ the numbers of changed entities other than the changed entities at corner cut and outside the axis*weight of a corresponding graphic layer)/(the number of unchanged entities + numerator)]*100% + fixed percentage of format position change;

the number of unchanged entities = the total number of entities participating in comparison in the reference drawing − the number of changed entities in the reference drawing − the number of changed entities in the project drawing;

fitness = 1− change rate for weights;

and

fitness for weight = 1− a percentage of weight change.

6. The method for determining fitness of two-dimensional drawings in engineering according to claim 5, wherein the step D further comprises: obtaining fitness of weight according to the following equation:

fitness of weight = (the number of same entity * weight of a corresponding graphic layer)/(the total number of entities * weight of a corresponding graphic layer).

7. The method for determining fitness of two-dimensional drawings in engineering according to claim 1, further comprising:
   step E, generating a comparison table of comparison results.

A, Obtain vector and bitmap information of a standard drawing as a basis and vector and bitmap information of a project drawing

↓

B, Perform a hash calculation on an entity type and a characteristic point in the vector and bitmap information, and compare project information for a same hash value

↓

C, Calculate, based on a comparison result, at least one or more of the following parameters: a percentage of entity change, a percentage of area difference, a percentage of area change after manual intervention and a percentage of pixel difference

↓

D, Obtain the fitness of the drawing based on the calculated parameters and different entity weight information

**Figure 1**

```
┌─────────────────────────────────┐
│  Open the referene drawing and the │
│         project drawing            │
└─────────────────────────────────┘
                 ⇓
┌─────────────────────────────────┐
│  Perform relevant setting of the   │
│ drawing comparison, and manually   │
│ determine non-reference options    │
└─────────────────────────────────┘
                 ⇓
┌─────────────────────────────────┐
│       Compare the drawings         │
└─────────────────────────────────┘
                 ⇓
┌─────────────────────────────────┐
│     View the comparison results    │
└─────────────────────────────────┘
                 ⇓
┌─────────────────────────────────┐
│ Perform manual intervention, and   │
│    recalculate the  fitness        │
└─────────────────────────────────┘
```

**Figure 2**

| INTERNATIONAL SEARCH REPORT | International application No. |
|---|---|
| | PCT/CN2017/085036 |

**A. CLASSIFICATION OF SUBJECT MATTER**

G06K 9/62 (2006.01) i

According to International Patent Classification (IPC) or to both national classification and IPC

**B. FIELDS SEARCHED**

Minimum documentation searched (classification system followed by classification symbols)

G06K; G06T; G09G; G06F

Documentation searched other than minimum documentation to the extent that such documents are included in the fields searched

Electronic data base consulted during the international search (name of data base and, where practicable, search terms used)

WPI, EPODOC, CNPAT, CNKI, IEEE, GOOGLE: 图像, 图纸, 工程, 项目, 吻合, 相似, 矢量, 位图, 哈希, 差异, 不同, 比对, 比较, 对比, blueprint, graphic?, drawing?, project, engineer+, anastomosis, coincidence, vector, bitmap?, hash+, difference, compar+

**C. DOCUMENTS CONSIDERED TO BE RELEVANT**

| Category* | Citation of document, with indication, where appropriate, of the relevant passages | Relevant to claim No. |
|---|---|---|
| A | US 2006132480 A1 (MULLER, KAY C.) 22 June 2006 (22.06.2006), claims 1-7 | 1-7 |
| A | US 2009051698 A1 (BOOSE, MOLLY L. et al.) 26 February 2009 (26.02.2009), entire document | 1-7 |
| A | US 2009006990 A1 (OSSESIA, MICHEL G.) 01 January 2009 (01.01.2009), entire document | 1-7 |
| A | JP S63104189 A (MITSUBISHI ELECTRIC CORP.) 09 May 1988 (09.05.1988), entire document | 1-7 |
| A | CN 101630335 A (VHSOFT TECHNOLOGIES (SHENZHEN) CO., LTD.) 20 January 2010 (20.01.2010), entire document | 1-7 |
| A | CN 102117412 A (PEKING UNIVERSITY FOUNDER GROUP CO., LTD. et al.) 06 July 2011 (06.07.2011), entire document | 1-7 |

☐ Further documents are listed in the continuation of Box C. ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 03 January 2018 | 10 January 2018 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer ZHAO, Ting Telephone No. (86-10) 62414434 |
|---|---|

Form PCT/ISA /210 (second sheet) (July 2009)

INTERNATIONAL SEARCH REPORT
Information on patent family members

| | | International application No. |
|---|---|---|
| | | PCT/CN2017/085036 |

| Patent Documents referred in the Report | Publication Date | Patent Family | Publication Date |
|---|---|---|---|
| US 2006132480 A1 | 22 June 2006 | None | |
| US 2009051698 A1 | 26 February 2009 | None | |
| US 2009006990 A1 | 01 January 2009 | None | |
| JP S63104189 A | 09 May 1988 | None | |
| CN 101630335 A | 20 January 2010 | None | |
| CN 102117412 A | 06 July 2011 | None | |

Form PCT/ISA/210 (patent family annex) (July 2009)